# EUROPÄISCHE PATENTSCHRIFT

(11) **EP 0 621 248 B1**
(45) Veröffentlichungstag und Bekanntmachung des Hinweises auf die Patenterteilung: **18.12.1996**
(21) Anmeldenummer: 94104640.1
(22) Anmeldetag: 24.03.1994
(51) Int. Cl.: C05F 17/02

(54) **Einrichtung zum Kompostieren von organischen Abfällen**
Device for composting organic wastes
Installation de compostage des déchets organiques

(30) Priorität: 21.04.1993 AT 779/93
(43) Veröffentlichungstag der Anmeldung: 26.10.1994
(73) Patentinhaber: Vogel, Werner, A-6923 Lauterach (AT); Müller, Peter Ing., A-6804 Feldkirch (AT)
(72) Erfinder: Vogel, Werner, A-6923 Lauterach (AT); Müller, Peter Ing., A-6804 Feldkirch (AT)
(74) Vertreter: Hefel, Herbert, Dipl.-Ing.

(56) Entgegenhaltungen:
- EP-A- 0 064 257
- EP-A- 0 429 883
- WO-A-90/10610
- DE-A- 2 100 636

## Beschreibung

Die Erfindung bezieht sich auf eine Einrichtung zum Kompostieren von organischen Abfällen. Solche organischen Abfälle fallen an im Haushalt, im Gewerbe, in der Lebensmittelindustrie und auch in der Forst- und Landwirtschaft.

Vergleichbare Einrichtungen sind bereits bekannt und sie sind zum Teil auch mit Förder-, Zwangsbelüftungs-, Ablufterfassung- und Entwässerungseinrichtungen versehen. Aufgrund der Anordnung und Ausführung dieser bekannten Einrichtungen sind sie jedoch nur bedingt funktionstüchtig (DE-A1 3 924 844; DE-OS 1 592 782; EP-A2 241 802; US-PS 3 523 012).

Die Erfindung hat sich zur Aufgabe gestellt, auf engem Raum eine Rotte mit kontinuierlichem Materialfluß zu erstellen. Eine weitere Aufgabe liegt in der Folge darin, den Rottenverlauf durch ständig Messung wesentlicher Parameter in bestmöglichstem Zustand zu halten und dadurch die gesamte Rottedauer soweit wie möglich zu verkürzen. Zur Lösung dieser Aufgabe ist die Erfindung gekennzeichnet durch mindestens einen tunnelartigen Kasten, in dessen Bodenbereich ein endloser, umlaufender Kratzbodenförderer angeordnet ist und an der einen Stirnseite des Kastens, der Einbringseite ein schräg nach oben gerichtetes Förderband angeordnet ist mit einem Beschickungskasten und an der anderen Stirnseite des Kastens, der Austragseite ein zum erstgenannten Förderband im wesentlichen parallel angeordnetes zweites Förderband vorgesehen ist und beide Förderbänder in gleichartig gestalteten, an den Stirnseiten des Kastens anflanschbaren Gehäusen untergebracht sind.

Zur Veranschaulichung der Erfindung wird diese anhand der beiliegenden Zeichnungen näher beschrieben und erläutert. Es zeigen:

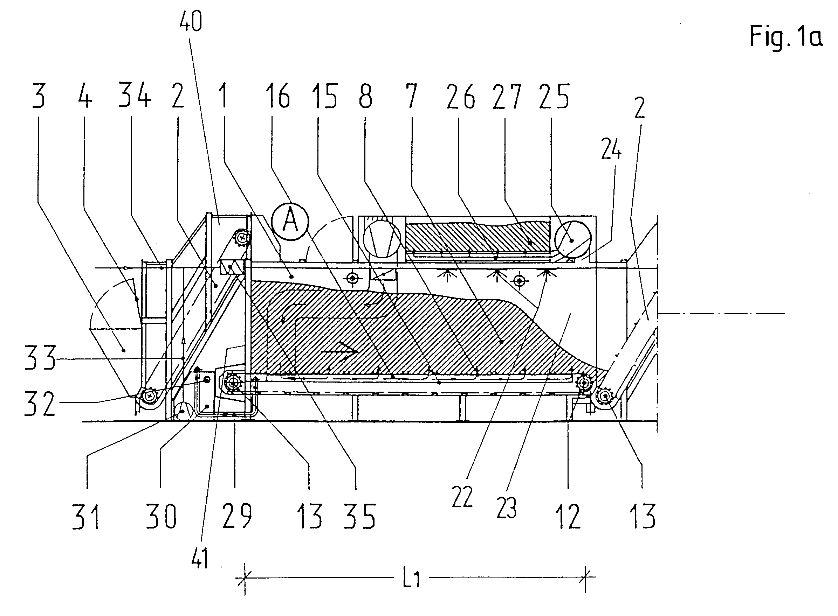

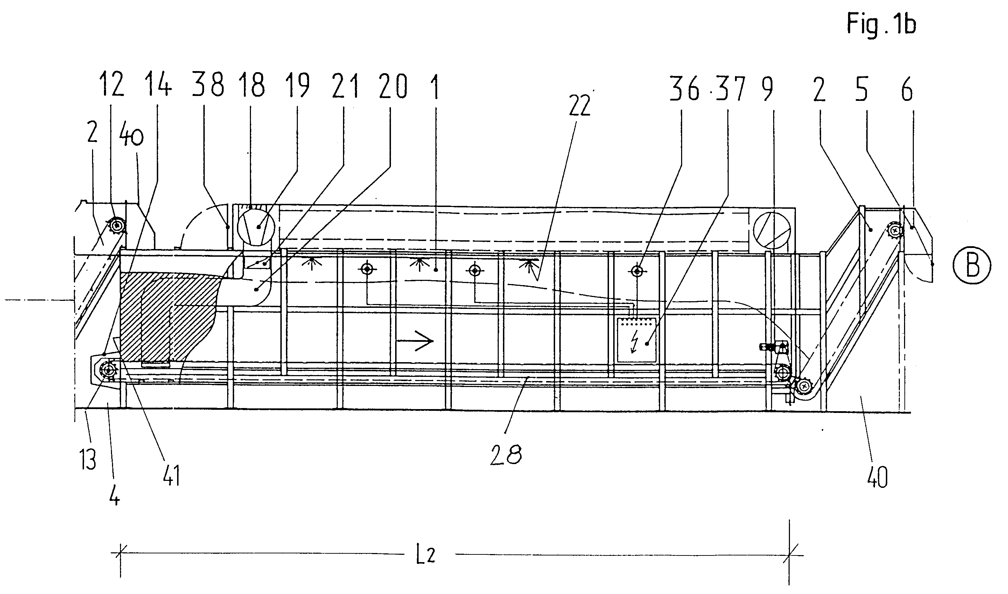

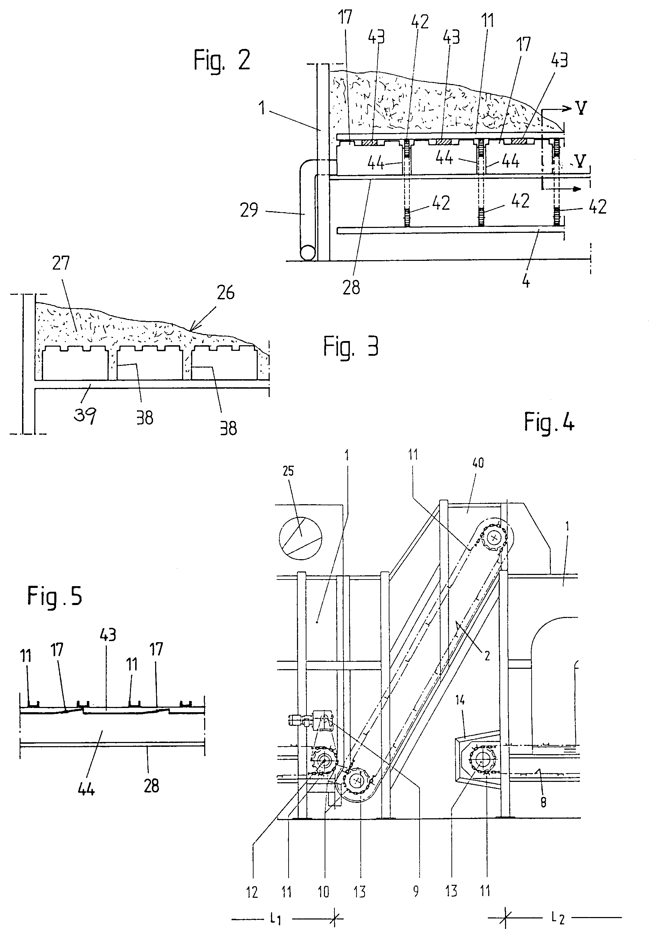

Fig. 1 (a und b) eine Ansicht der Einrichtung, z.T. aufgeschnitten; Fig. 2 einen Detailquerschnitt durch den Kratzbodenförderer; Fig. 3 einen Detailquerschnitt durch den Luftfilter; Fig. 4 das bei der Einrichtung nach Fig. 1 im Mittelbereich liegende Förderband in einem gegenüber dieser Darstellung vergrößerten Maßstab; Fig. 5 einen Detailschnitt - Schnittlinie V - V in Fig. 2.

Die Einrichtung nach Fig. 1 besteht aus zwei tunnelartigen Kästen 1, die einen rechteckigen Querschnitt aufweisen und die aus nicht rostendem Blech oder aus Kunststoffplatten gefertigt sind. Diese beiden tunnelartigen Kästen 1 sind im wesentlichen gleich aufgebaut, sie unterscheiden sich nur durch ihre Längen L1 bzw. L2. Zwischen diesen beiden tunnelartigen Kästen 1 ist in einem eigenen Gehäuse 40 ein schräg aufgerichtetes Förderband 2 vorgesehen, das als Übertragungseinrichtung zwischen den beiden tunnelartigen Kästen 1 dient. Das Gehäuse 40 ist an den Stirnseiten der beiden Kästen 1 angeflanscht.

Identische Gehäuse 40 mit schräg aufgerichteten Förderbändern 2 sind an den beiden äußeren Stirnseiten der tunnelartigen Kästen 1 vorgesehen. Auf der Einbringseite A der Einrichtung ist am Gehäuse 40 ein Beschickungskasten 3 mit einer Verschlußklappe 4 angeflanscht, an der Austragseite B der Einrichtung hingegen ein Abwurfkasten 5 mit einer Verschlußklappe 6 für die Austragsöffnung. In Durchlaufrichtung des aufzubereitenden Abfalles gesehen sind an den Eingangsseiten der tunnelartigen Kästen 1 Vertikalwände 41. Oberhalb der Oberkante dieser Vertikalwände 41 liegen die Abwurfseiten der Förderbänder 2.

Der Boden der tunnelartigen Kästen 1 wird jeweils durch einen Kratzbodenförderer 8 gebildet, der aus mehreren parallel zueinander liegenden, endlosen, über Antriebswalzen und Umlaufwalzen 13 geführte Ketten 42 gebildet ist, welche durch quer verlaufende Kratzleisten 11 miteinander verbunden sind. Die Kratzleisten 11 des fördernden Trumes der Ketten 42 liegen auf Gleitleisten 43 auf, die auf der Oberseite von Kanälen festgelegt sind, die ihrerseits durch zur Transportrichtung des Kratzbodenförderers 8 parallel liegende und voneinander etwas distanzierte U-Profile 44 gebildet sind, die an ihrer Oberseite Luftaustrittshutzen 17 tragen, deren Höhe etwas geringer ist als die Höhe der Gleitleisten 43 und die Achsen der Austrittsöffnungen dieser Luftaustrittshutzen 17 in der Transportrichtung des Kratzbodenförderers liegen bzw. mit dieser einen spitzen Winkel einschließen. Diese U-Profile 44 liegen mit ihrer offenen Seite auf dem Boden einer Wanne 28 auf, die ihrerseits mit einem Ableitrohr 29 verbunden ist. Die durch die U-Profile 44 gebildeten Kanäle sind mit einem Zuluftkanal 20 verbunden. Die Ketten 42 des Kratzbodenförderers liegen in den Zwischenräumen zwischen den voneinander etwas distanzierten U-Profilen 44 (Fig. 2).

Der Zuluftkanal 20 ist über eine Ansaugleitung 18 mit der Atmosphäre verbunden und ein Zuluftventilator 19 sorgt für die erforderliche Frischluftzufuhr. Der Zuluftkanal 20 besitzt innerhalb des Kastens 1 eine Bypassklappe 21, über welche der Zuluftkanal 20 mit dem Abluftraum 23 des Kastens 1 ganz oder teilweise verbindbar ist. Eine Luftaustrittsöffnung 24 an der Oberseite des Kastens 1 führt über einen Abluftventilator 25 zu einem auf der Oberseite des tunnelartigen Kastens 1 angeordneten Filter 26, dessen Boden ebenfalls aus U-Profilen 38 aufgebaut ist, wobei diese U-Profile ebenfalls als Luftkanäle dienen, durch welche die Abluft strömt. Auf diesen durch die U-Profile 38 geführten Filterboden ist eine Biofiltermasse 27 aufgeschüttet. Der Filter 26 erstreckt sich jeweils über die Länge des tunnelartigen Kastens 1, auf dem er angeordnet ist. Das Ableitrohr 29, das mit der Wanne 28 verbunden ist, führt zu einem Abwasserbehälter 30, der mit einer in den tunnelartigen Kasten 1 führenden Rückführleitung 33 verbunden ist. In dieser Rückführleitung 33 liegt eine Pumpe 31. In dem im tunnelartigen Kasten 1 liegenden Abschnitt der Rückführleitung 33 sind eine Vielzahl von Sprühdüsen 22 vorgesehen. Über ein hier nicht dargestelltes zu- und abschaltbares Ventil ist an dieser Rückführleitung 33 auch eine Brauchwasserzuleitung 34 anschließbar. Ferner ist hier ein Dosiergerät 35 angeordnet.

Über mehrere über die jeweiligen Kästen 1 verteilte Meßsonden 36 können Umweltparameter (Temperatur, Luftfeuchte, Gasanteile u.dgl.) erfaßt werden. Die entsprechenden Meßwerte dienen als Steuergröße, die von einer Steuerwarte 37 ausgewertet und für Regel- und Steuerzwecke eingesetzt werden, über welche die Antriebsmotoren der verschiedenen Baukomponenten (Förderbänder, Kratzbodenförderer, Ventilatoren, Bypassklappe u.dgl.) gesteuert und geregelt werden.

Stirnseitig am linken (Fig. 1) Kasten 1 ist auf der Einbringseite A das Beschickungs-, Umsetz- und Austragegerät mit dem Förderband 2 im Gehäuse 40 angeflanscht. An dieses Eintrage-, Umsetz- und Austragegerät mit dem Förderband 2 im Gehäuse 40 ist zum Beschicken der verschließbare Beschickungskasten 3 mit der Verschlußklappe 4 angebracht. Zum Umsetzen des Abfalles von einem Kasten 1 in den nächsten wird das Eintrage-, Umsetz- und Austragegerät mit dem Förderband 2 im Gehäuse 40 als Verbindungsstück zwischen die beiden tunnelartigen Kästen 1 montiert. Soll das Eintrage-, Umsetz- und Austragegerät mit dem Förderband 2 im Gehäuse 40 als Austragevorrichtung dienen, wird es am letzten tunnelartigen Kasten 1 angeflanscht und mit einem Abwurfkasten 5 mit Verschlußklappe für die Austragsöffnung 6 ausgestattet.

Der Transport des Kompostiergutes 7 innerhalb der tunnelartigen Kästen 1 von der Einbringseite A zur Austragseite B erfolgt durch den Kratzbodenförderer 8. Die außerhalb der Kasten 1 liegende Umlaufwalze 13 wird mittels einer Abdeckhaube 14 so gekapselt, daß auch an dieser Stelle Abluft oder Abwässer nicht austreten können.

Um das gesamte Kompostiergut 7 in gleichmäßig verteilter Form mit ausreichend Sauerstoff versorgen zu können, ist der Belüftungsboden 15 in der oben beschriebenen Weise (Fig. 2) ausgebildet. Die erforderliche Luft wird durch den Zuluftventilator 19 über den Zuluftkanal 20 mit der Bypassklappe 21 zum Belüftungsboden 15 befördert. Die im Zuluftkanal 20 eingebaute Bypassklappe 21 verbindet diesen mit dem Abluftraum 23 im tunnelartigen Kasten 1 und der Ansaugleitung 18 des Zuluftventilators 19 und ermöglicht so die Verwendung der Abluft unter Zumischung von Frischluft als Rottezuluft. Auf diese Weise wird das Kompostiergut 7 gleichzeitig als Biofiltermasse eingesetzt. Die überschüssige Ablult wird über die Luftaustrittsöffnung 24 aus dem Abluftraum 23 mit dem Abluftventilator 25 abgesaugt und über den Filter 26 in die Biofiltermasse 27 gepreßt. Die Biofiltermasse 27 hat die Aufgabe, die z.T. stark geruchsbelastete Abluft zu desodorieren.

Das nach Einfüllen der frischen organischen Abfälle, insbesondere jener aus Haushaltungen und Gewerbe entstehende entstehende Preßwasser sowie das während des Rotteprozesses entstehende Kondensat kann zwischen den U-Profilen 44 des Belüftungsbodens 15 absickern und wird in der Wanne 28 gesammelt. Eine Ableitung der so gefaßten Abwässer erfolgt über das Ableitrohr 29 in den Abwasserbehälter 30 mit Pumpe 31 und Überlauf 32. Bei Bedarf kann nun das gesammelte Abwasser über die Rückführleitung 33 rückgeführt und zur Bewässerung des Kompostiergutes 7 im nächstfolgenden tunnelartigen Kasten 1 verwendet werden. Überschüssiges Abwasser kann über den Überlauf in einen Abwasserkanal geleitet werden. Da das Kompostiergut jahreszeitlich bedingt mit stark unterschiedlichem Wassergehalt anfällt, ist auch eine Brauchwasserzuleitung 34 über die Dosiervorrichtung 35 vorgesehen.

Die Überwachung der Materialfeuchtigkeit und des Sauerstoffgehaltes in der Abluft erfolgt über Meßsonden 36, welche an verschiedenen Stellen innerhalb der tunnelartigen Kästen 1 angebracht sind. Die Meßdaten werden von einem Prozessor in der Steuerwarte 37 fortlaufend ausgewertet und in Steuersignale und Regelsignale umgewandelt, die die Antriebsmotoren der einzelnen Baukomponenten steuern und regeln. Dadurch wird bewirkt, daß das Kompostiergut 7 permanent mit den erforderlichen Mengen Sauerstoff und Wasser versorgt wird.

Durch die geschilderten baulichen Maßnahmen bzw. Gestaltungen der Einrichtung sind für die Aufbereitung der organischen Abfälle optimale Bedingungen geschaffen. Es sind dies:
- Gute Entwässerung des Kompostiergutes in der Anfangs- bzw. Startphase der Rotteführung;
- Erhaltung der vorhandenen Zellstrukturen durch schonendes Bewegen des Kompostiergutes beim Transportieren und Umsetzen;
- Gute, gleichmäßige und sanfte Zwangsdurchlüftung des Kompostiergutes;
- Erhaltung eines ausgewogenen Wasserhaushaltes im Kompostiergut.

Ein weiterer Vorteil der Erfindung liegt darin, daß durch gezielte Erfassung der Stoffwechselprodukte in Form von Abluft und Abwasser (Permeat) diese zum Teil in den Prozeß zurückgeführt werden und die übrigbleibende und zu entsorgende Restmenge dadurch auf ein Minimum reduziert wird.

Darüber hinaus ist durch das klar strukturierte Baukastensystem die modulare Ausbaumöglichkeit einer Kompostieranlage ermöglicht. Deshalb ist das Gesamtsystem in folgende Funktions- und Baugruppen unterteilt:
- Kompostierkasten mit Kratzbodenförderer
- Eintrage-, Umsetz- und Austrageeinrichtung
- Be- und Entlüftungssysteme
- Abluftfilteranlage
- Kondensatrückführungssystem

Die einzelnen Baugruppen sind gleich ausgebildet und werden in alternierender Folge, wie aus Fig. 1 ersichtlich aneinandergeschlossen, die einzelnen Gehäuse werden stirnseitig aneinander angeflanscht. Ist im beschriebenen Ausführungsbeispiel mehrfach von einem Förderband 2 die Rede, das von Gehäuse 40 aufgenommen ist, so sei der Vollständigkeit halber erwähnt, daß diese Anlagenkomponente bevorzugt auch als Kratzkettenförderer ausgebildet sein kann.

### Legende

### zu den Hinweisziffern:

- 1: Tunnelartiger Kasten
- 2: Förderband
- 3: Beschickungskasten
- 4: Verschlußklappe
- 5: Abwurfkasten
- 6: Verschlußklappe für Austragsöffnung
- 7: Kompostiergut
- 8: Kratzbodenförderer
- 9: Getriebemotor
- 10:
- 11: Kratzleiste
- 12: Antriebswalze
- 13: Umlaufwalze
- 14: Abdeckhaube
- 15: Belüftungsboden
- 16:
- 17: Luftaustrittshutze
- 18: Ansaugleitung
- 19: Zuluftventilator
- 20: Zuluftkanal
- 21: Bypassklappe
- 22: Sprühdüse
- 23: Abluftraum
- 24: Luftaustrittsöffnung
- 25: Abluftventilator
- 26: Filter
- 27: Biofiltermasse
- 28: Wanne
- 29: Ableitrohr
- 30: Abwasserbehälter
- 31: Pumpe
- 32: Überlauf
- 33: Rückführleitung
- 34: Brauchwasserzuleitung
- 35: Dosiergerät
- 36: Meßsonde
- 37: Steuerwarte
- 38:
- 39: Wannenboden
- 40: Gehäuse
- 41: Vertikalwand
- 42: Kette
- 43: Gleitleiste
- 44: U-Profil

## Patentansprüche

1. Einrichtung zum Kompostieren von organischen Abfüllen, gekennzeichnet durch mindestens einen tunnelartigen Kasten (1), in dessen Bodenbereich ein endloser, umlaufender Kratzbodenförderer (8) angeordnet ist und an der einen Stirnseite des Kastens (1), der Einbringseite (A), ein schräg nach oben gerichtetes Förderband (2) angeordnet ist mit einem Beschickungskasten (3) und an der anderen Stirnseite des Kastens (1), der Austragseite (B), ein zum erstgenannten Förderband im wesentlichen parallel angeordnetes zweites Förderband (2) vorgesehen ist und beide Förderbänder (2) in gleichartig gestalteten, an den Stirnseiten des Kastens (1) anflanschbaren Gehäusen (40) untergebracht sind.

2. Einrichtung nach Anspruch 1, dadurch gekennzeichnet, daß der Kratzbodenförderer (8) durch mehrere, zueinander parallel liegende, über Antriebs- und Umlaufwalzen (12, 13) geführte Ketten (42) gebildet ist, welche durch quer zur Umlaufrichtung der Ketten (42) liegende Kratzleisten (11) miteinander verbunden sind und die oberen Trume der Ketten (42) zwischen längsverlaufenden, voneinander distanzierten Kanälen sich befinden, auf deren Oberseite die Kratzleisten (11) aufliegen und diese Oberseiten der Kanäle Luftaustrittshutzen (17) besitzen und die Kanäle an einem Zuluftkanal (20) angeschlossen sind.

3. Einrichtung nach Anspruch 2, dadurch gekennzeichnet, daß an der Oberseite der Kanäle längsverlaufende, der gleitenden Auflage der Kratzleisten (11) dienende Gleitleisten (43) festgelegt sind, deren Höhe zumindest der Höhe der Luftaustrittshutzen (17) entspricht.

4. Einrichtung nach Anspruch 2 oder 3, dadurch gekennzeichnet, daß die Kanäle durch nach unten offene U-Profile (44) gebildet sind.

5. Einrichtung nach Anspruch 2, dadurch gekennzeichnet, daß die Achsen der Luftaustrittsöffnungen der Luftaustrittshutzen (17) in der Förderrichtung des Kratzbodenförderers (8) liegen oder zumindest mit diesem einen spitzen Winkel einschließen.

6. Einrichtung nach Anspruch 2, dadurch gekennzeichnet, daß die die Kanäle bildenden U-Profile (44) in einer mit einem Ableitrohr (29) verbundenen Wanne (28) liegen.

7. Einrichtung nach Anspruch 6, dadurch gekennzeichnet, daß das Ableitrohr (29) zu einem Abwasserbehälter (30) führt, der innerhalb des Kastens (1) bzw. eines Gehäuses (40) für ein Förderband (2) angeordnet ist und mit diesem Abwasserbehälter (30) eine in den tunnelartigen Kasten (1) führende Rückführleitung (33) verbunden ist, die innerhalb des Kastens (1) mehrere Sprühdüsen (22) aufweist.

8. Einrichtung nach Anspruch 7, dadurch gekennzeichnet, daß an der Rückführleitung (33) eine über ein Ventil zu- bzw. abschaltbare Brauchwasserleitung (34) angeschlossen ist und die Rückführleitung (33) über ein Dosiergerät (35) geführt ist.

9. Einrichtung nach Anspruch 2, dadurch gekennzeichnet, daß im Zuluftkanal (20) eine Bypassklappe (21) angeordnet ist, mittels welcher der mit der Atmosphäre verbundene Zuluftkanal (20) ganz oder teilweise mit dem Abluftraum (23) des tunnelartigen Kastens (1) verbindbar ist.

10. Einrichtung nach Anspruch 9, dadurch gekennzeichnet, daß der Abluftraum (23) des tunnelartigen Kastens (1) vorzugsweise über einen Abluftventilator (25) mit einem auf dem tunnelartigen Kasten (1) angeordneten Filter (26) verbunden ist.

11. Einrichtung nach Anspruch 10, dadurch gekennzeichnet, daß der Boden des Filters (26) durch mehrere parallel zueinander liegende, mit ihren offenen Seiten nach unten weisenden U-Profilen (38) gebildet die an ihrer Oberseite Luftaustrittsöffnungen aufweisen und die durch die auf einem Wannenboden (39) aufliegenden U-Profile (38) gebildeten Kanäle mit der vom Abluftventilator (25) kommenden Abluftleitung verbunden sind.

12. Einrichtung nach Anspruch 1, dadurch gekennzeichnet, daß die zum Antrieb der einzelnen Baukomponenten dienenden Antriebsmotoren außerhalb der Gehäuse (40) bzw. des tunnelartigen Kastens (1) liegen und/oder gekapselt sind.

13. Einrichtung nach einem der Ansprüche 1 bis 12, dadurch gekennzeichnet, daß innerhalb des tunnelartigen Kastens (1) mindestens eine Meßsonde (36) zur Erfassung der Luftfeuchtigkeit und/oder der Temperatur und/oder von Gasbestandteilen usw. vorgesehen ist und die Meßsonde (36) mit einer elektronischen Programmsteuereinrichtung (37) verbunden ist, die die Antriebsmotoren der einzelnen Baukomponenten regelt bzw. steuert.

14. Einrichtung nach einem der Ansprüche 1 bis 13, dadurch gekennzeichnet, daß in Durchlautrichtung der aufzubereitenden Abfälle in alternierender Folge mehrere aufgerichtete Förderbänder (2) und tunnelartige Kästen (1) aufeinanderfolgen, wobei an den jeweiligen Stirnseiten der in einer solchen Reihe aufeinanderfolgenden tunnelartigen Kästen (1) aufgerichtete Förderbänder (2) in Gehäusen (40) angeordnet sind.

15. Einrichtung nach Anspruch 1, dadurch gekennzeichnet, daß die tunnelartigen Kästen (1) einen rechteckigen Querschnitt aufweisen.

## Claims

1. Apparatus for the decomposition of organic waste, characterised by at least one tunnel-like box (1) in the base region of which there is arranged an endless, circulating scraper base conveyor (8), and an upwards inclined conveyor belt (2) is arranged at one end face of the box (1), the feed side (A), together with a feeding box (3), and a second conveyor belt (2) arranged substantially parallel to the first-mentioned conveyor belt is provided at the other end face of the box (1), the discharge side (B), and both conveyor belts (2) are housed in housings (40) of the same design which can be screwed on the end faces of the box (1).

2. Apparatus in accordance with Claim 1, characterised in that the scraper base conveyor (8) is formed by a plurality of parallel chains (42) which are guided via drive and circulation rollers (12, 13) and are connected to one another by scraper strips (11) lying transverse to the circulating direction of the chains (42), and the upper strands of the chains (42) are located between longitudinally-extending channels which are located at a distance from one another and on the upper side of which the scraping strips (11) rest, and these upper sides of the channels have air discharge scoops (17) and the channels are connected to an air inlet channel (20).

3. Apparatus in accordance with Claim 2, characterised in that longitudinally-extending slide strips (43) serving to slidingly support the scraper strips (11) are fastened to the upper side of the channels and their height at least corresponds to the height of the air discharge scoops (17).

4. Apparatus in accordance with Claim 2 or 3, characterised in that the channels are formed by downwards-open U-sections (44).

5. Apparatus in accordance with Claim 2, characterised in that the axes of the air outlets of the air discharge scoops (17) lie in the conveying direction of the scraper base conveyor (8) or at least form an acute angle with the latter.

6. Apparatus in accordance with Claim 2, characterised in that the U-sections (44) forming the channels lie in a trough (28) connected to an outlet pipe (29).

7. Apparatus in accordance with Claim 6, characterised in that the outlet pipe (29) leads to a waste water container (30) arranged within the box (1) or a housing (40) for a conveyor belt (2), and a return line (33) leading into the tunnel-like box (1) is connected to this waste water container (30) and has a plurality of spraying nozzles (22) within the box (1).

8. Apparatus in accordance with Claim 7, characterised in that a process-water line (34) which can be opened and closed via a valve is connected to the return line (33), and the return line (33) runs via a dosing apparatus (35).

9. Apparatus in accordance with Claim 2, characterised in that a by-pass valve (21) is arranged in the air inlet channel (20), the air inlet channel (20) connected to the atmosphere being totally or partially connectable to the spent air space (23) of the tunnel-like box (1) by means of this by-pass valve (21).

10. Apparatus in accordance with Claim 9, characterised in that the spent air space (23) of the tunnel-like box (1) is preferably connected via a spent air fan (25) to a filter (26) arranged on the tunnel-like box (1).

11. Apparatus in accordance with Claim 10, characterised in that the base of the filter (26) is formed by a plurality of parallel U-sections (38) the open sides of which are directed downwards and which have air outlets at their upper side, and the channels formed by the U-sections (38) resting on a trough base (39) are connected to the spent air line issuing from the spent air fan (25).

12. Apparatus in accordance with Claim 1, characterised in that the driving motors serving to drive the individual components lie and/or are encased exterior to the housing (40) or the tunnel-like box (1).

13. Apparatus in accordance with any one of Claims 1 to 12, characterised in that at least one measuring probe (36) for determining the atmospheric moisture and/or the temperature and/or gas constituents etc. is provided within the tunnel-like box (1), and the measuring probe (36) is connected to an electronic program control device (37) which regulates or controls the driving motors of the individual components.

14. Apparatus in accordance with any one of Claims 1 to 13, characterised in that a plurality of erected conveyor belts (2) and tunnel-like boxes (1) alternately follow one another in the direction of passage of the waste to be treated, erected conveyor belts (2) being arranged in housings (40) at the respective end faces of the tunnel-like boxes (1) following one another in a succession of this type.

15. Apparatus in accordance with Claim 1, characterised in that the tunnel-like boxes (1) have a rectangular cross-section.

## Revendications

1. Dispositif de compostage de déchets organiques, caractérisé en ce qu'il comporte au moins un caisson (1) en forme de tunnel, dans la zone du fond duquel est agencé un transporteur racleur tournant sans fin (8), il est prévu, sur un première partie frontale du caisson (1), la partie de chargement (A), une bande transporteuse (2) dirigée en oblique vers le haut avec un caisson de chargement (3) et, sur la deuxième partie frontale du caisson (1), la partie d'extraction (B), une deuxième bande transporteuse (2) agencée sensiblement en parallèle avec la première bande transporteuse mentionnée, et les deux bandes transporteuses (2) sont logées dans des enceintes (40) de même conformation bridables sur les parties frontales du caisson (1).

2. Dispositif selon la revendication 1, caractérisé en ce que le transporteur racleur de fond (8) est formé de plusieurs chaînes (42), parallèles les unes aux autres, guidées par des rouleaux d'entraînement et de renvoi (12, 13), qui sont raccordées les unes aux autres par des racles (11) s'étendant transversalement a la direction de rotation des chaînes (42), et les brins supérieurs des chaînes (42) sont disposés entre des canaux longitudinaux espacés les uns des autres, sur la surface supérieure desquels les racles (11) s'appuient et ces surfaces supérieures des canaux comportent des chapeaux de sortie d'air (17) et les canaux sont raccordés a un canal d'alimentation en air (20).

3. Dispositif selon la revendication 2, caractérisé en ce que, sur la surface supérieure des canaux, sont fixées des lattes de frottement (43) longitudinales servant d'appui glissant aux racles (11), lattes dont la hauteur correspond au moins a la hauteur des chapeaux de sortie d'air (17).

4. Dispositif selon la revendication 2 ou 3, caractérisé en ce que les canaux sont formés par des profilés en U (44) ouverts vers le bas.

5. Dispositif selon la revendication 2, caractérisé en ce que les axes des ouvertures de sortie d'air des chapeaux de sortie d'air (17) sont disposés dans la direction de transport du transporteur racleur de fond (8) et font au moins avec celui-ci un angle aigu.

6. Dispositif selon la revendication 2, caractérisé en ce que les profilés en U (44) formant les canaux se trouvent dans une cuve (28) raccordée à un tuyau de dérivation (29).

7. Dispositif selon la revendication 6, caractérisé en ce que le tuyau de dérivation (29) conduit à un réservoir d'eaux usées (30), qui est agencé à l'intérieur du caisson (1) ou d'une enceinte (40) d'une bande transporteuse (2) et, à ce réservoir d'eaux usées (30) est raccordée une conduite de recyclage (33) menant dans la caisson (1) en forme de tunnel, ladite conduite (33) présentant à l'intérieur du caisson (1) plusieurs buses de pulvérisation (22).

8. Dispositif selon la revendication 7, caractérisé en ce que, sur la conduite de recyclage (33) est raccordée une conduite d'eau industrielle (34), qui peut être ouverte ou fermée via une soupape, et la conduite de recyclage (33) est gérée par un appareil de dosage (35).

9. Dispositif selon la revendication 2, caractérisé en ce que dans le canal d'alimentation en air (20) est agencé un clapet de dérivation (21) par lequel le canal d'alimentation en air (20) relié à l'atmosphère peut être raccordé totalement ou partiellement à l'espace d'air d'échappement (23) du caisson (1) en forme de tunnel.

10. Dispositif selon la revendication 9, caractérisé en ce que l'espace d'air d'échappement (23) du caisson (1) en forme de tunnel est raccordé à un filtre (26) agencé sur le caisson (1) en forme de tunnel, de préférence via un ventilateur d'air d'échappement (25).

11. Dispositif selon la revendication 10, caractérisé en ce que le fond du filtre (26) est formé par plusieurs profilés en U (38) disposés parallèlement les uns aux autres et dont les faces ouvertes sont tournées vers le bas, lesdits profilés présentant, sur leur partie supérieure, des ouvertures de sortie d'air, et en ce que les canaux formés par les profilés en U (38) s'appliquant sur un fond de cuve (39) sont raccordés à la conduite de dérivation issue du ventilateur d'échappement d'air (25).

12. Dispositif selon la revendication 1, caractérisé en ce que les moteurs d'entraînement servant à l'entraînement des composants individuels se trouvent à l'extérieur de l'enceinte (40) ou du caisson (1) en forme de tunnel et/ou sont blindés.

13. Dispositif selon l'une quelconque des revendications 1 à 12, caractérisé en ce qu'il est prévu, à l'intérieur du caisson (1) en forme de tunnel, au moins une sonde de mesure (36) pour mesurer l'humidité de l'air et/ou la température et/ou des composants gazeux, etc. et en ce que la sonde de mesure (36) est connectée à un dispositif de commande de programme électronique (37) qui règle ou commande les moteurs d'entraînement des composants individuels.

14. Dispositif selon l'une quelconque des revendications 1 à 13, caractérisé en ce que plusieurs bandes transporteuses (2) et caissons (1) en forme de tunnels alignés se succèdent dans la direction de passage des déchets à traiter, en séquence alternée, en agençant, sur les parties frontales respectives d'une telle série de caissons (1) en forme de tunnel successifs, des bandes transporteuses alignées (2) dans des enceintes (40).

15. Dispositif selon la revendication 1, caractérisé en ce que les caissons (1) en forme de tunnels présentent une section transversale rectangulaire.
